# EUROPÄISCHE PATENTSCHRIFT

(11) **EP 3 574 561 B1**
(45) Veröffentlichungstag und Bekanntmachung des Hinweises auf die Patenterteilung: **18.11.2020**
(21) Anmeldenummer: 18702193.6
(22) Anmeldetag: 25.01.2018
(51) Int. Cl.: H02J 3/38

(54) **VERFAHREN ZUM EINSPEISEN EINES ELEKTRISCHEN WECHSELSTROMES**
METHOD FOR FEEDING IN AN ELECTRICAL ALTERNATING CURRENT
PROCÉDÉ POUR L'INJECTION D'UN COURANT ÉLECTRIQUE ALTERNATIF

(30) Priorität: 25.01.2017 DE 102017101359
(43) Veröffentlichungstag der Anmeldung: 04.12.2019
(73) Patentinhaber: Wobben Properties GmbH, 26607 Aurich (DE)
(72) Erfinder: HEYEN, Christian, 26607 Aurich (DE)
(74) Vertreter: Eisenführ Speiser
(86) Internationale Anmeldenummer: PCT/EP2018/051777
(87) Internationale Veröffentlichungsnummer: WO 2018/138184

(56) Entgegenhaltungen:
- WO-A2-2010/079235
- DE-A1-102008 018 497
- DE-A1-102014 219 052
- US-A1- 2012 087 165
- US-A1- 2016 285 390

## Beschreibung

Die vorliegende Erfindung betrifft ein Verfahren zum Einspeisen eines elektrischen Wechselstromes in ein elektrisches Versorgungsnetz mittels einer Windenergieanlage sowie eine Windenergieanlage, die wenigstens einen Wechselrichter mit einem Wechselrichterausgang umfasst, der mit einem aktiven Filter gekoppelt ist.

Es ist besonders für Windenergieanlagen bekannt, elektrischen Wechselstrom unter der Verwendung von elektrischen Wechselrichtern zu erzeugen bzw. elektrischen Wechselstrom mittels elektrischer Wechselrichter in das elektrische Versorgungsnetz einzuspeisen.

Hierzu weisen Windenergieanlage üblicherweise wenigstens einen elektrischen Generator zum Erzeugen eines elektrischen Wechselstromes auf. Der vom Generator erzeugte elektrische Wechselstrom wird dann zum Einspeisen in das elektrische Versorgungsnetz mittels wenigstens eines Wechselrichters so gerichtet, dass der vom Generator erzeugte elektrische Wechselstrom dann den Anforderungen des elektrischen Versorgungsnetzes genügt.

Der elektrische Wechselrichter ist dabei üblicherweise mehrphasig ausgebildet und ist zumeist in Windenergieanlagen großer Leistung modular ausgeführt, d.h. der Wechselrichter weist eine Vielzahl von Wechselrichtermodulen auf, die gemeinsam den elektrischen Wechselrichter ausbilden.

Elektrische Wechselrichter weisen aber auch eine Reihe von Nachteilen auf, beispielsweise ist der von einem elektrischen Wechselrichter bereitgestellte elektrische Wechselstrom oberschwingungsbehaftet, d.h. der elektrische Wechselstrom bzw. der elektrische Wechselrichterstrom weist eine Vielzahl von Oberschwingungen verschiedenster Ordnungen auf, die seitens des elektrischen Versorgungsnetzes unerwünscht sind.

Um solche, insbesondere unerwünschten, Oberschwingungen zu minimieren, können beispielsweise aktive oder passive Filter am Ausgang des elektrischen Wechselrichters vorgesehen bzw. angeordnet werden, deren Aufgabe es ist, die unerwünschten Oberschwingung heraus zu filtern bzw. den vom elektrischen Wechselrichter bereitgestellten Wechselstrom zu glätten.

Passive Filter sind dabei im einfachsten Fall aus einer Kombination von Kapazitäten, Impedanzen und/oder Induktivitäten ausgebildet. Passive Filter weisen also eine Kombination von passiven Bauteilen auf, nämlich Kondensatoren, Widerständen und/oder Spulen. Üblicherweise werden solche passiven Filter ferner einmalig für ihr Einsatzgebiet konfiguriert.

Aktive Filter weisen zusätzlich wenigstens eine weitere aktive Komponente auf, also eine Komponente die steuerbar ist und im Falle eines aktiven Filters auch gesteuert wird. Diese aktive Komponente kann beispielsweise ein Leistungsschalter sein, also ein IGBT oder ein MOSFET. Zudem werden aktive Filter einmalig für ihr Einsatzgebiet initialisiert und im Laufe des Betriebs entsprechend nachkonfiguriert, ihre Steuerung wird also ständig ihrem Einsatzgebiet neu angepasst.

Nachteilig bei den bisher bekannten Filtern sind insbesondere der eingeschränkte Arbeitsbereich bei passiven Filtern bzw. die hohen Signallaufzeiten bei aktiven Filtern, die dazu führen, dass der vom Generator erzeugte, vom Wechselrichter gerichtete und vom Filter gefilterte elektrische Wechselstrom trotz dieser Vorkehrungen Oberschwingungen aufweist, die den Anforderungen des elektrischen Versorgungsnetzes nicht genügen, insbesondere in Ländern mit hohen Anforderungen, die insbesondere ein schwaches elektrisches Versorgungsnetz aufweisen, wie beispielsweise Brasilien.

Das Deutsche Patent- und Markenamt hat in der Prioritätsanmeldung zur vorliegenden Anmeldung folgenden Stand der Technik recherchiert: DE 10 2012 203 015 A1, DE 10 2014 219 052 A1, US 2013/0 039 100 A1, US 5 831 842 A und JP 2003-209 973 A. Die Druckschrift DE 10 2008 018497 A1 offenbart einen Wechselrichter und ein aktives Filter.

Der vorliegenden Erfindung liegt somit die Aufgabe zugrunde, zumindest eines der oben genannten Probleme zu adressieren. Insbesondere soll eine Lösung vorgeschlagen werden, die ein für Windenergieanlagen geeignetes Filtern eines elektrischen Wechselstroms bzw. eines elektrischen Wechselrichterstroms ermöglicht. Zumindest soll aber zu bisher bekannten Konzepten eine alternative Lösung vorgeschlagen werden.

Erfindungsgemäß wird somit ein Verfahren zum Einspeisen eines elektrischen Wechselstromes in ein elektrisches Versorgungsnetz mittels einer Windenergieanlage nach Anspruch 1 vorgeschlagen. Demnach umfasst die Windenergieanlage wenigstens einen Wechselrichter mit einem Wechselrichterausgang zum Bereitstellen eines elektrischen Wechselrichterstromes und ein an den Wechselrichterausgang gekoppeltes aktives Filter.

Der Wechselrichter ist somit dazu eingerichtet, an seinem Wechselrichterausgang einen Wechselrichterstrom, insbesondere einen mehrphasigen Wechselstrom, bereitzustellen bzw. abzugeben.

Das aktive Filter ist zudem dazu eingerichtet, den an dem Wechselrichterausgang bereitgestellten Wechselrichterstrom zu filtern, insbesondere um dadurch einen gefilterten Wechselstrom zum Einspeisen in das elektrische Versorgungsnetz bereitzustellen bzw. diesen bevorzugt mittels eines Transformators in das elektrische Versorgungsnetz einzuspeisen. Das aktive Filter ist somit bevorzugt zwischen dem wenigstens einen elektrischen Wechselrichter und dem elektrischen Versorgungsnetz angeordnet.

Besonders bevorzugt weist die Windenergieanlage hierfür ein Vollumrichterkonzept auf, wobei unter einem Vollumrichterkonzept insbesondere zu verstehen ist, dass der gesamte von der Windenergieanlage erzeugte elektrische Strom über einen Wechselrichter oder eine Anordnung mehrerer Wechselrichter bzw. Wechselrichtermodule so geführt wird, dass der gesamte in das elektrische Versorgungsnetz eingespeiste Strom über diesen Wechselrichter bzw. diese Anordnung mehrerer Wechselrichter bzw. Wechselrichtermodule geführt wurde.

In einem ersten Schritt stellt der elektrische Wechselrichter nun durch Schalthandlungen wenigstens eines Schalters an seinem Ausgang einen Wechselrichterstrom bereit. Der Wechselrichter richtet somit den vom Generator erzeugten Strom oder einen Teil davon, um am Wechselrichterausgang einen Wechselstrom bereitzustellen bzw. abzugeben. Der so am Wechselrichterausgang bereitgestellte Wechselrichterstrom ist dabei insbesondere ein dreiphasiger Wechselstrom.

Der elektrische Wechselrichter ist hierfür bevorzugt dreiphasig ausgebildet und weist zum Erzeugen des elektrischen Wechselrichterstromes wenigstens einen Ober- und einen Unterschalter für jede der Phasen auf. Die Schalter des Wechselrichters können dabei beispielsweise über ein Toleranzbandverfahren angesteuert werden, um den Wechselrichterstrom zu erzeugen bzw. diesen am Wechselrichterausgang bereitzustellen.

Unabhängig von der Art des Steuerverfahrens wird dabei die Steuerung des Wechselrichters bzw. die Steuerung der Schalter des Wechselrichters von einem Kontroller übernommen, der die Schalter des Wechselrichters mittels Ansteuerungssignale so ansteuert, dass sich am Wechselrichterausgang ein entsprechender Wechselrichterstrom einstellt.

In einem zweiten Schritt werden erfindungsgemäß die Schalthandlungen des Wechselrichters erfasst. Es werden also die Schalthandlungen der einzelnen Schalter des Wechselrichters überwacht. Dies kann beispielsweise durch ein direktes Erfassen eines Schaltzustandes des entsprechenden Schalters erfolgen oder durch einen Abgriff der Ansteuersignale die vom Kontroller an die Schalter übermittelt werden. Sendet der Kontroller beispielsweise ein Ansteuersignal an einen Schalter des Wechselrichters, so wird dieses Signal abgegriffen und insbesondere dem aktiven Filter zugeführt bzw. übermittelt. Bevorzugt erhält das aktive Filter somit dieselben Signale, wie die Schalter des elektrischen Wechselrichters.

Anschließend wird das aktive Filter in Abhängigkeit der erfassten Schalthandlungen gesteuert, um den vom Wechselrichter am Wechselrichterausgang bereitgestellten Wechselrichterstrom zu filtern, insbesondere um dadurch einen gefilterten Wechselstrom zu erschaffen.

Der so erschaffene bzw. gefilterte Wechselstrom kann dann beispielsweise mit weiteren Wechselströmen überlagert und über einen Transformator in ein Windparknetz und/oder in ein elektrisches Versorgungsnetz eingespeist werden.

Es wird somit insbesondere vorgeschlagen, dass das aktive Filter direkt in Abhängigkeit der Ansteuersignale für die Schalter des Wechselrichters gesteuert wird. Der Wechselrichter bzw. der Kontroller des Wechselrichters teilt dem aktiven Filter also bevorzugt die Ansteuersignale für die Schalter mit, beispielsweise direkt mit demselben Signal oder weiter bevorzugt indirekt über einen Signalabgriff der Ansteuersignale. Durch ein solches Vorgehen liegen nahezu dieselben Signallaufzeiten zwischen dem Kontroller des Wechselrichters und den Schaltern des Wechselrichters sowie zwischen dem Kontroller des Wechselrichters und dem aktiven Filter vor. Ein solcher Aufbau bzw. eine solche Vorgehensweise ermöglicht insbesondere eine Möglichkeit zum Filtern eines Wechselrichterstromes, bei der keine zeitlichen Verzögerungen in den Steuersignalen zwischen dem zu filternden Wechselstrom und der aktiven Filterung vorliegen. Das aktive Filter ist somit dazu eingerichtet, einen von einem Wechselrichter bereitgestellten Wechselrichterstrom zu filtern ohne diesen messen zu müssen.

Besonders vorteilhaft hierbei ist ferner, dass das aktive Filter nicht initialisiert und nachkonfiguriert werden muss wie bei bisher bekannten Verfahren oder der Strom laufend gemessen werden muss, um die Abweichungen von einem Soll-Wert zu erfassen.

Das erfindungsgemäße Verfahren ermöglicht es somit insbesondere, einen aktiven Filter so zu steuern, dass die Oberschwingungen eines Wechselrichterstromes minimiert werden, ohne dass der vom Wechselrichter bereitgestellte Wechselstrom gemessen oder der aktive Filter initialisiert und nachkonfiguriert werden muss. Das vorgeschlagene Verfahren schafft somit wenigstens eine Möglichkeit zur Filterung von Oberschwingungen, bei der der aktive Filter nur einmalig initialisiert werden muss. Unter Initialisierung ist dabei insbesondere die erstmalige Konfiguration des aktiven Filters im Zusammenspiel mit dem bzw. den entsprechenden Wechselrichtern zu verstehen.

Vorzugsweise erfolgt das Steuern des aktiven Filters so, dass der in das elektrische Versorgungsnetz eingespeiste elektrische Wechselstrom einen verringerten Oberschwingungsanteil gegenüber dem elektrischen Wechselrichterstrom aufweist.

Das aktive Filter wird somit so gesteuert, dass der gefilterte Wechselstrom, der in das elektrische Versorgungsnetz eingespeist wird, weniger Oberschwingung aufweist, als der vom Wechselrichter bereitgestellte Wechselrichterstrom. Hierdurch können beispielsweise alle Oberschwingungen des bereitgestellten Wechselrichterstromes oder nur bestimmte Oberschwingungen des bereitgestellten Wechselrichterstromes minimiert werden.

Es wird somit eine Möglichkeit bereitgestellt Oberschwingungen gezielt und nach Bedarf zu minimieren. Beispielsweise kann das aktive Filter dazu eingerichtet sein, Oberschwingungen der 3. Ordnung zu filtern, demnach die Oberschwingungen anderer Ordnungen dann gleich und/oder sogar größer sind.

Das aktive Filter ist somit bevorzugt in Abhängigkeit des elektrischen Versorgungsnetzes bzw. den Anforderungen des elektrischen Versorgungnetzes konfigurierbar und/oder initialisierbar. Dies ist besonders vorteilhaft in Hinsicht auf unterschiedliche nationale oder regionale Anforderungen, da zum Aufstellen einer Windenergieanlage an einem beliebigen Standort lediglich das aktive Filter einmalig initialisiert werden muss.

Vorzugweise weisen die Schalthandlungen des wenigstens einen Schalters eine Schaltfrequenz auf und das Erfassen der Schalthandlungen erfolgt mit einer Tastfrequenz, wobei die Tastfrequenz wenigstens doppelt so groß, insbesondere wenigstens fünfmal so groß, bevorzugt wenigstens zehnmal so groß, ist, wie die Schaltfrequenz der zu erfassenden Schalthandlung des Schalters.

Die Schalter des elektrischen Wechselrichters weisen beispielsweise zum Bereitstellen des elektrischen Wechselstromes am Wechselrichterausgang eine Schaltfrequenz von 2 kHz auf. Die Schalter des Wechselrichters bekommen somit wenigstens 2000 Ansteuersignale pro Sekunde von dem Kontroller des Wechselrichters übermittelt. Die Ansteuersignale selbst werden dann mittels einer Tastfrequenz abgetastet bzw. mit einer erhöhten bzw. höheren Frequenz an das aktive Filter gesendet, die wenigstens doppelt so groß ist, wie die Schaltfrequenz, bevorzugt zehnmal so groß ist, wie die Schaltfrequenz.

Vorzugsweise erfolgt das Steuern des aktiven Filters abhängig eines die Schalthandlungen des wenigstens einen Schalters auslösenden Ansteuersignals und außerdem oder alternativ erfolgt das Steuern des aktiven Filters abhängig einer die Schalthandlungen des wenigstens einen Schalters auslösenden Steuerspannung.

Das aktive Filter erfasst somit bevorzugt die Ansteuersignale der Schalter des Wechselrichters bzw. das aktive Filter bekommt die Ansteuersignale für die Schalter des Wechselrichters durch den Kontroller des Wechselrichters direkt übermittelt. Das aktive Filter wird somit mit denselben Signalen gesteuert wie die Schalter des Wechselrichters.

Außerdem oder alternativ kann das Steuern des aktiven Filters auch in Abhängigkeit einer Steuerspannung der Schalter erfolgen, beispielsweise kann hierfür die Gate-Spannung des Halbleiters erfasst bzw. gemessen werden.

Vorzugsweise wird der wenigstens eine Wechselrichter mittels eines Toleranzbandverfahrens angesteuert, um den Wechselrichterstrom am Wechselrichterausgang bereitzustellen und das aktive Filter filtert den Strom den Wechselrichterstrom abhängig der vom Toleranzbandverfahren erzeugten Schalthandlungen des wenigstens einen Schalters. Der elektrische Wechselrichter wird somit in Abhängigkeit eines Toleranzbandverfahrens angesteuert bzw. durch ein Toleranzbandverfahren gesteuert.

Beim Toleranzbandverfahren wird um eine sinusförmige Funktion, die dem gewünschten Ausgangsstrom des Wechselrichters entspricht, ein Toleranzband gelegt, welches eine untere Bandgrenze und eine obere Bandgrenze aufweist. Zur Durchführung des Toleranzbandverfahrens wird ferner der erzeugte Ausgangsstrom erfasst und mit dem Toleranzband, also der unteren und oberen Bandgrenze, verglichen. Befindet sich der Strom in der positiven Halbwelle und erreicht die untere Bandgrenze, wird ein Schaltimpuls mittels eines Ansteuersignals ausgelöst und der entsprechende Schalter des Wechselrichters ändert den Ausgangsstrom. Erreicht der erfasste Ausgangsstrom nun die obere Bandgrenze, wird der Schaltimpuls mittels eines weiteren Ansteuersignals beendet. Befindet sich der Strom in der negativen Halbwelle und erreicht die obere Bandgrenze, wird ein Schaltimpuls mit eines weiteren Ansteuersignals ausgelöst und der entsprechende Schalter des Wechselrichters ändert den Ausgangsstrom. Erreicht der erfasste Ausgangsstrom nun die untere Bandgrenze, wird der Schaltimpuls mittels eines weiteren Ansteuersignals beendet. Im Ergebnis variiert der Strom innerhalb des Toleranzbandes um den vorgegebenen, idealisierten sinusförmigen Verlauf, wobei die Schalter des Wechselrichters ständig an- und wieder ausgehen. Die Schalter weisen dabei eine variable Schaltfrequenz auf, die im Wesentlichen von der Breite des Toleranzbands abhängt.

Besonders vorteilhaft bei der Verwendung eines Toleranzbandverfahrens ist, dass die auftretenden Amplituden der Oberschwingungen des Wechselrichterstromes unterhalb von 1% bezogen auf den Nennstrom liegen und das aktive Filter somit deutlich weniger große Stromspitzen filtern muss als beispielsweise bei einem puls-weiten-modulierten Wechselrichterstrom.

Somit ergeben sich für das erfindungsgemäße Verfahren besonders vorteilhafte Synergien in Bezug auf Wechselrichter, die mittels eines Toleranzbandverfahrens gesteuert werden. Beispielsweise kann ein aktives Filter bei gleicher Baugröße dazu verwendet werden, mehrere toleranzbandverfahren-erzeugte Wechselrichterströme zu filtern.

Vorzugsweise erfolgt das Steuern des aktiven Filters ohne Berücksichtigung des bereitgestellten Wechselrichterstromes.

Das aktive Filter wird somit unabhängig von dem erzeugten Wechselrichterstrom gesteuert. Das aktive Filter weist also keine primären Mittel zum Erfassen des erzeugten Wechselrichterstromes auf. Auch weist das aktive Filter bevorzugt keinen Eingang auf, dessen Eingangsgröße der erzeugte Wechselrichterstrom ist. Gleichwohl kann zur Durchführung des Toleranzbandverfahrens der erzeugte Wechselrichterstrom erfasst werden. Dieser wird dann aber nicht dem aktiven Filter zur Durchführung des erfindungsgemäßen Verfahrens übergeben.

Vorzugsweise erfolgt das Steuern des aktiven Filters in Abhängigkeit der erfassten Schalthandlungen, um wenigstens ein Oberschwingungsanteil des ersten Wechselstromes zu reduzieren, insbesondere einen Stromoberschwingungsanteil des ersten Wechselstromes zu minimieren, bevorzugt um einen Stromoberschwingungsanteil zu reduzieren, der ausgewählt ist aus der Liste umfassend: 1. Harmonische Stromoberschwingung bis 60. Harmonische Stromoberschwingung.

Das aktive Filter ist somit dazu eingerichtet, wenigstens einen Oberschwingungsanteil zu reduzieren. Zudem ist das aktive Filter derart aufgebaut, dass es Frequenzen eines bestimmten Spektrums abschwächt, insbesondere Oberschwingung bis zur 60. Harmonischen Stromoberschwingung. Bevorzugt ist das aktive Filter somit dazu eingerichtet Oberschwingung bis zu 3 kHz zu filtern, also der 60. Oberschwingung einer Grundfrequenz von 50 Hz.

Es wurde nämlich ferner erkannt, dass das erfindungsgemäße Verfahren bzw. der erfindungsgemäße Aufbau des Filters besonders günstig ist für Oberschwingungen bis zur 60. Ordnung.

Vorzugsweise umfasst der elektrische Wechselrichter mehrere Wechselrichtermodule mit einem Wechselrichtermodulausgang zum Bereitstellen eines Wechselrichtermodulstromes und die Wechselrichtermodulausgänge sind so verschaltet, dass sich ihre Wechselrichtermodulströme zu dem Wechselrichterstrom überlagern, wobei eine Sammelauswerteeinrichtung vorgesehen ist, zum Erfassen und Auswerten von Ansteuersignalen der mehreren Wechselrichtermodule, und die Sammelauswerteeinrichtung das aktive Filter zum Filtern des Wechselrichterstromes ansteuert.

Der Wechselrichter ist somit aus mehreren Modulen aufgebaut. Die Module selbst wiederum können aus einem vollständigen Wechselrichter ausgebildet sein, so dass unter wenigsten einem Wechselrichter auch eine Vielzahl von Wechselrichtern zu verstehen ist. Zudem ist das aktive Filter dazu eingerichtet, einen aus mehreren Wechselrichterströmen überlagerten Wechselrichterstrom zu filtern. Hierfür ist insbesondere eine Sammelauswerteeinrichtung vorgesehen, die die Ansteuersignale aller zu filternder Wechselrichter bzw. Wechselrichtermodule empfängt. Beispielsweise werden drei Wechselrichter bzw. drei Wechselrichtermodule mit einem aktiven Filter gefiltert. Sofern jeder Wechselrichter 6 Schalter aufweist, empfängt die Sammelauswerteeinrichtung 18 Ansteuersignale. Die Ansteuersignale werden dann innerhalb der Sammelauswerteeinrichtung beispielsweise mittels eines Look-Up-Tables ausgewertet, um das aktive Filter entsprechend anzusteuern, damit dieser den Gesamtstrom filtert. Bevorzugt erfasst die Sammelauswerteeinrichtung hierzu die Schaltzustände der einzelnen Schalter der Wechselrichtermodule.

Vorzugsweise wird das aktive Filter in Abhängigkeit der erfassten Schalthandlungen und wenigstens zusätzlich in Abhängigkeit einer Zwischenkreisspannung des wenigstens einen Wechselrichters und/oder eines Stromsollwertes für den wenigstens einen Wechselrichter gesteuert.

Das aktive Filter erfasst somit zusätzlich die Zwischenkreisspannung und bevorzugt den Stromsollwert für den wenigstens einen Wechselrichter. Hierdurch wird insbesondere ermöglicht mittels des aktiven Filters gezielter auf Rippelströme zu reagieren und/oder den aktiven Filter gezielter auf den wenigstens einen Wechselrichter abzustimmen.

Erfindungsgemäß wird zudem eine Windenergieanlage vorgeschlagen, umfassend wenigstens einen Wechselrichter mit einem Wechselrichterausgang zum Bereitstellen eines ersten Wechselstromes und ein an den Wechselrichterausgang gekoppeltes aktives Filter zum Filtern des Wechselrichterstromes, um einen gefilterten Wechselstrom zum Einspeisen in das elektrische Versorgungsnetz zu schaffen, wobei das aktive Filter dazu eingerichtet, in Abhängigkeit einer erfassten Schalthandlung wenigstens eines Schalters des Wechselrichters gesteuert zu werden, um den ersten Wechselstrom zu filtern und dadurch den gefilterten Wechselstrom zu schaffen.

Die erfindungsgemäße Windenergieanlage weist somit wenigstens einen Wechselrichter auf, der einen Wechselrichterstrom bereitstellt, der beispielsweise mittels eines Toleranzbandverfahrens erzeugt wird. Am Ausgang des Wechselrichters ist zudem ein aktives Filter angeordnet, welches dazu einrichtet ist, in Abhängigkeit der Schalthandlungen der Schalter des Wechselrichters, den am Ausgang des Wechselrichters bereitgestellten Wechselstrom zu filtern.

Somit wird insbesondere eine Windenergieanlage vorgeschlagen, die dazu eingerichtet ist, ein vorstehend oder nachstehend beschriebenes Verfahren zum Einspeisen eines elektrischen Wechselstromes auszuführen.

Bevorzugt weist die Windenergieanlage zudem einen Windenergieanlagentransformator auf, der dazu eingerichtet ist, den vom aktiven Filter gefilterten Wechselstrom auf eine Versorgungsnetzspannung bzw. Windparknetzspannung hoch zu transformieren. Beispielsweise weist der Wechselrichterstrom eine Spannung von 1 kV auf und die Windparknetzspannung beträgt 10 kV. Das Übertragungsverhältnis des Windenergieanlagentransformators ist dann 1:10.

Vorzugsweise weist die Windenergieanlage einen Kontroller zum Ansteuern des Wechselrichters auf, um ein vorstehend oder nachstehend beschriebenes Verfahren durchzuführen.

Die Windenergieanlage umfasst somit einen Kontroller, der dazu eingerichtet ist, die Wechselrichter und insbesondere die Schalter, bevorzugt die Ober- und Unterschalter, der Wechselrichter anzusteuern, um einen Wechselrichterstrom am Wechselrichterausgang bereitzustellen.

Hierzu übermittelt der Kontroller insbesondere Ansteuersignale an den Wechselrichter bzw. die Schalter des Wechselrichters oder der Wechselrichtermodule, wobei die Ansteuersignale bevorzugt ebenfalls an das aktive Filter übermittelt werden, um den am Wechselrichteraugang bereitgestellten Wechselrichterstrom des Wechselrichters bzw. der Wechselrichtermodule zu filtern und dadurch den gefilterten Wechselstrom zu schaffen

Vorzugsweise weist der wenigstens eine Wechselrichter wenigstens 6 Schalter auf, wobei jeweils zwei Schalter, insbesondere ein Ober- und ein Unterschalter, einen Strom für jeweils eine Phase des Wechselrichterstromes bereitstellen.

Der Wechselrichter bzw. die Wechselrichtermodule sind somit dazu eingerichtet, einen dreiphasigen Wechselstrom am Ausgang bereitstellen, wobei jeweils 2 Schalter für eine Phase vorgesehen sind.

Vorzugsweise ist der wenigstens eine Schalter des Wechselrichters bzw. die Schalter des Wechselrichters als IGBTs oder MOSFETs ausgebildet.

Die Schalter des Wechselrichters sind somit dazu eingerichtet, mit besonders hohen Schaltfrequenzen zu arbeiten, um einen Wechselrichterstrom bereitzustellen, der im Wesentlichen einem idealen Sinus entspricht bzw. dessen Abweichungen von einem idealen Sinus im Mittel kleiner sind als 5 % bezogen auf den Nennstrom.

Der Wechselrichter ist somit auch dazu eingerichtet, mittels eines Toleranzbandverfahrens angesteuert zu werden, wobei die Schalter des Wechselrichters beispielsweise eine Schaltfrequenz von bis zu 20 kHz aufweisen.

Vorzugsweise wird der wenigstens eine Wechselrichter mittels eines Toleranzbandverfahrens angesteuert und das aktive Filter filtert den Wechselrichterstrom abhängig der vom Toleranzbandverfahren erzeugten Schalthandlungen des wenigstens einen Schalters.

Vorzugsweise ist der Wechselrichter ein Leistungswechselrichter, insbesondere ein Leistungswechselrichter, der dazu eingerichtet ist, in einem Vollumrichterkonzept einer Windenergieanlage verwendet zu werden.

Der Wechselrichter ist somit dazu eingerichtet, elektrische Leistungen besonders bis zu 8 MW zu richten. Hierfür ist der Wechselrichter beispielsweise modular aufgebaut, d.h. er weist mehrere Wechselrichtermodule auf, die bevorzugt miteinander parallel verschalten sind, um einen Wechselrichterstrom bereitzustellen. Dieser so bereitgestellte Wechselstrom wird dann mit dem aktiven Filter gefiltert. Bevorzugt weist die Windenergieanlage dabei genau einen aktiven Filter auf. Es sind aber auch mehrere aktive Filter denkbar, beispielsweise wenn die Windenergieanlage mehrere baugleiche Wechselrichter aufweist, die jeweils in einem Leistungsschrank untergebracht sind. Dann weist alternativ jeder Leistungsschrank ein aktives Filter auf. Bevorzugt wird die Anzahl der aktiven Filter so gewählt, dass der von der Windenergieanlage in das elektrische Versorgungsnetz eingespeiste Wechselstrom den Anforderungen des elektrischen Versorgungsnetzes genügt.

Vorzugsweise weist das aktive Filter wenigstens ein aktives Bauteil auf, insbesondere wenigstens einen IGBT oder einen MOSFET, bevorzugt wenigstens einen Siliciumcarbid-IGBT oder einen Siliciumcarbid-MOSFET, das dazu eingerichtet ist, mit einer Taktfrequenz zu arbeiten, die bevorzugt größer ist als die Schaltfrequenz des wenigstens einen Schalters bzw. die größer ist als die Schaltfrequenz der Schalter multipliziert mit der Anzahl der Wechselrichtermodule des Wechselrichters.

Die Taktfrequenz des aktiven Bauteils wird somit an die Anzahl der Schalter des Wechselrichters bzw. der Wechselrichtermodule angepasst, deren Wechselrichterstrom das aktive Filter filtern soll.

Hierbei wurde erkannt, dass die Taktfrequenz sowohl mit der Schaltfrequenz des Schalters als auch mit der Anzahl der Schalter des Wechselrichters erhöht werden muss, um einen gefilterten Wechselstrom zu erzeugen, der den Anforderungen des elektrischen Versorgungsnetzes genügt.

Insbesondere wird hierzu vorgeschlagen, dass die Taktfrequenz des aktiven Bauteils größer sein muss, als die Schalterfrequenz der Schalter multipliziert mit der Anzahl der Wechselrichtermodule.

Bevorzugt ist der bzw. sind die Schalter des aktiven Filters hierzu aus Siliciumcarbid-IGBTs oder Siliciumcarbid-MOSFETs oder anderen Transistoren ausgebildet, die insbesondere mit Takt- bzw. Schaltfrequenzen über 20 kHz betrieben werden können. Wenn beispielsweise das aktive Filter für 5 Wechselrichter zuständig ist, deren Schalter jeweils mit 20 kHz betrieben werden, so weist das aktive Filter, insbesondere der Schalter des aktiven Filters, eine Takt- bzw. Schaltfrequenz von größer als 100 kHz auf. Die Schaltfrequenz des aktiven Filter entspricht somit wenigstens N mal der Schalterfrequenz der N Wechselrichter.

Vorzugsweise umfasst der elektrische Wechselrichter mehrere Wechselrichtermodule mit einem Wechselrichtermodulausgang zum Abgeben eines Wechselrichtermodulstromes und die Wechselrichtermodulausgänge sind so verschaltet, dass sich ihre Wechselrichtermodulströme zu dem Wechselrichterstrom überlagern, wobei eine Sammelauswerteeinrichtung vorgesehen ist, zum Erfassen und Auswerten von Ansteuersignalen der Wechselrichtermodule, und die Sammelauswerteeinrichtung das aktive Filter zum Filtern des Wechselrichterstromes ansteuert.

Die Windenergieanlage weist somit mehrere Wechselrichter bzw. mehrere Wechselrichtermodule auf, deren Ausgangsströme mittels eines aktiven Filters gefiltert werden.

Hierzu ist eine Sammelauswerteinrichtung vorgesehen, die sämtliche Ansteuersignale der entsprechenden Wechselrichter bzw. Wechselrichtermodule erfasst und auswertet. Zudem ist die Sammelauswerteeinrichtung dazu eingerichtet, das aktive Filter in Abhängigkeit der erfassten Ansteuersignale so zu steuern, dass der durch das aktive Filter gefilterte Wechselrichterstrom weniger Oberschwingungen aufweist als der vom Wechselrichter bereitgestellte Wechselrichterstrom.

Dies kann beispielsweise mittels eines Look-Up-Tables bzw. einer Steuertabelle erfolgen, die unter Berücksichtigung der Anzahl der Wechselrichter bzw. der Wechselrichtermodule einmalig initialisiert wurde.

Vorzugsweise ist das aktive Filter so parallel zum Wechselrichterausgang verschaltet, dass das aktive Filter dazu eingerichtet ist, wenigstens eine Stromoberschwingung des ersten Wechselstromes zu filtern, insbesondere zu reduzieren.

Das aktive Filter ist somit dazu eingerichtet, Stromoberschwingung zu filtern.

Die vorliegende Erfindung wird nun nachfolgend exemplarisch anhand von Ausführungsbeispielen unter Bezugnahme auf die begleitenden Figuren näher erläutert.
- Fig. 1: zeigt eine schematische Ansicht einer erfindungsgemäßen Windenergieanlage gemäß einer Ausführungsform,
- Fig. 2: zeigt einen schematischen Aufbau eines elektrischen Stranges einer erfindungsgemäßen Windenergieanlage zum Einspeisen eines elektrischen Wechselstroms gemäß einer Ausführungsform,
- Fig. 3: zeigt schematisch den Aufbau eines Wechselrichters zum Bereitstellen eines Wechselrichterstromes mittels eines Toleranzbandverfahrens,
- Fig. 4: zeigt schematisch die Kopplung des aktiven Filters mit den Schaltern mehrerer Wechselrichtermodule und
- Fig. 5: zeigt schematisch eine Steuertabelle einer erfindungsgemäßen Sammelauswerteeinrichtung.

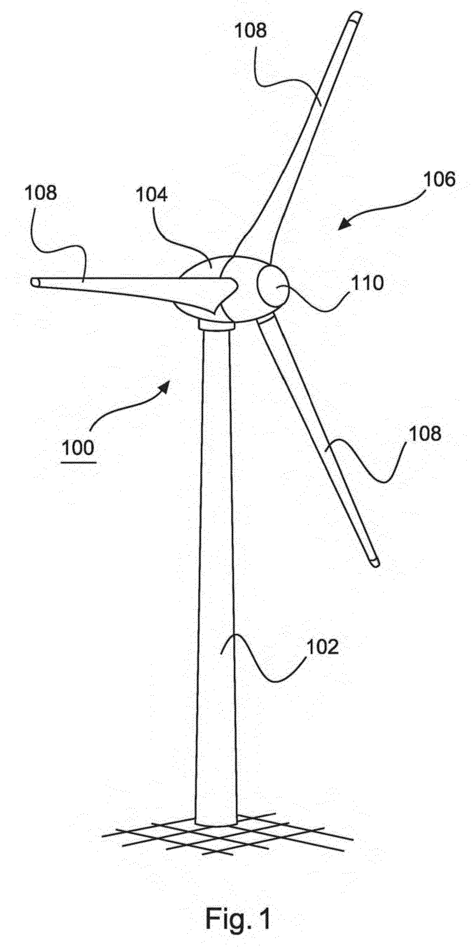

Fig. 1 zeigt eine Windenergieanlage 100 zum Einspeisen eines elektrischen Wechselstromes in ein elektrisches Versorgungsnetz.

Die Windenergieanlage 100 weist hierzu einen Turm 102 und eine Gondel 104 auf. An der Gondel 104 ist ein aerodynamischer Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an, wobei der Generator bevorzugt als 6-phasiger Ringgenerator ausgebildet ist.

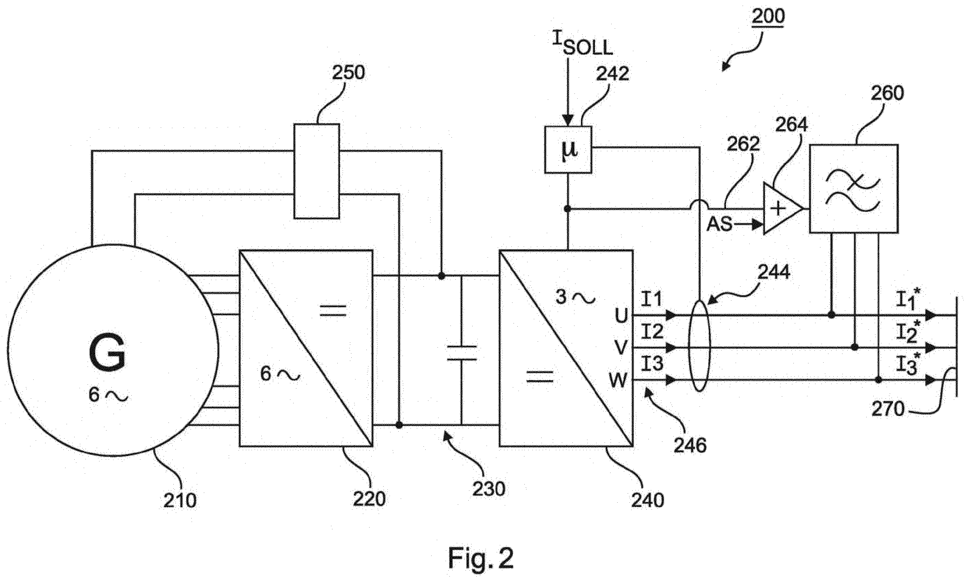

Fig. 2 zeigt vereinfacht einen elektrischen Strang 200 einer in Fig. 1 gezeigten, erfindungsgemäßen Windenergieanlage.

Der elektrische Strang 200 weist einen 6-phasigen Ringgenerator 210 auf, der durch den Wind über einen mechanischen Antriebsstrang der Windenergieanlage in Drehbewegung versetzt wird, um einen 6-phasigen elektrischen Wechselstrom zu erzeugen.

Der 6-phasige elektrische Wechselstrom wird vom Generator 210 an den Gleichrichter 220 übergeben, der über einen Gleichspannungszwischenkreis 230 mit dem 3-phasigen Wechselrichter 240 verschaltet ist.

Der 6-phasige Ringgenerator 210, der als Synchrongenerator ausgebildet ist, wird dabei über die Erregung 250 aus dem Gleichspannungszwischenkreis 230 elektrisch erregt.

Der elektrische Strang 200 weist somit ein Vollumrichter-Konzept auf, bei dem mittels des 3-phasigen Wechselrichters 240 in das Netz 270 eingespeist wird. Üblicherweise handelt es sich bei diesem Netz 270 um ein Windparknetz, welches über einen Windparktransformator in ein elektrisches Versorgungsnetz einspeist. Es kommt aber auch eine Einspeisung direkt in das elektrische Versorgungsnetz an Stelle des Parknetzes 270 in Betracht.

Ferner kann zum Einspeisen in das Netz 270 auch ein Transformator vorgesehen sein.

Zum Erzeugen des dreiphasigen Stromes I₁, I₂, I₃ für jede der Phasen U, V, W wird der Wechselrichter 240 mit einem Toleranzbandverfahren gesteuert. Die Steuerung erfolgt dabei über den Kontroller 242, der mittels einer Stromerfassung 244 jeden der drei durch den Wechselrichter 240 am Wechselrichterausgang 246 bereitgestellten bzw. erzeugten Ströme I1, I2, I3 erfasst.

Der Kontroller ist somit dazu eingerichtet, mittels der Stromerfassung 244 jede Phase des Wechselrichters einzeln zu steuern. Hierzu kann der Kontroller 242 einen Strom-Sollwert Isoll vorgeben, in Abhängigkeit dessen die Ströme I₁, I₂, I₃ gesteuert werden. Der Strom-Sollwert Isoll wird bevorzugt anlagenintern für jede Phase U, V, W einzeln berechnet und vorgegeben. Die so erzeugten Ströme I₁, I₂, I₃ werden auch als Wechselrichterstrom bzw. Wechselrichterströme bezeichnet.

Der Wechselrichter 240 ist an seinem Wechselrichterausgang 246 ferner mit einem aktiven Filter 260 gekoppelt, um den an dem Wechselrichterausgang 241 bereitgestellten Wechselrichterstrom I₁, I₂, I₃ zu filtern und dadurch einen gefilterten Wechselstrom I*₁, I*₂, I*₃ zum Einspeisen in das elektrische Versorgungsnetz bereitzustellen.

Hierfür wird das aktive Filter 260 in Abhängigkeit der erfassten Schalthandlungen der Schalter des Wechselrichters 240 gesteuert. Dass das aktive Filter 260 in Abhängigkeit dieser Schalthandlungen gesteuert wird, ist durch die Signalleitung 262 angedeutet, die die Ansteuersignale des Kontrollers 242 an die Schalter des Wechselrichters 240 auch an das aktive Filter 260 übergibt.

Ferner ist eine Sammelauswerteeinrichtung 264 vorgesehen, die dazu eingerichtet ist, die Ansteuersignale mittels der Signalleitung 262 und weitere Signal AS, wie beispielsweise die Zwischenkreisspannung U_{DC} und den Stromsollwert Iₛₒₗₗ, zu erfassen und diese auszuwerten. Die Sammelauswerteeinrichtung 264 steuert dann in Abhängigkeit der so erfassten und ausgewerteten Ansteuersignale und weiteren Signale AS das aktive Filter 260 an.

Um insbesondere Stromoberwellen bis zur 60. Ordnung zu filtern, weist das aktive Filter 260 ein Tiefpassverhalten auf, wobei das aktive Filter 260 mittels der Ansteuersignale für die Schalter des Wechselrichter 240 gesteuert wird.

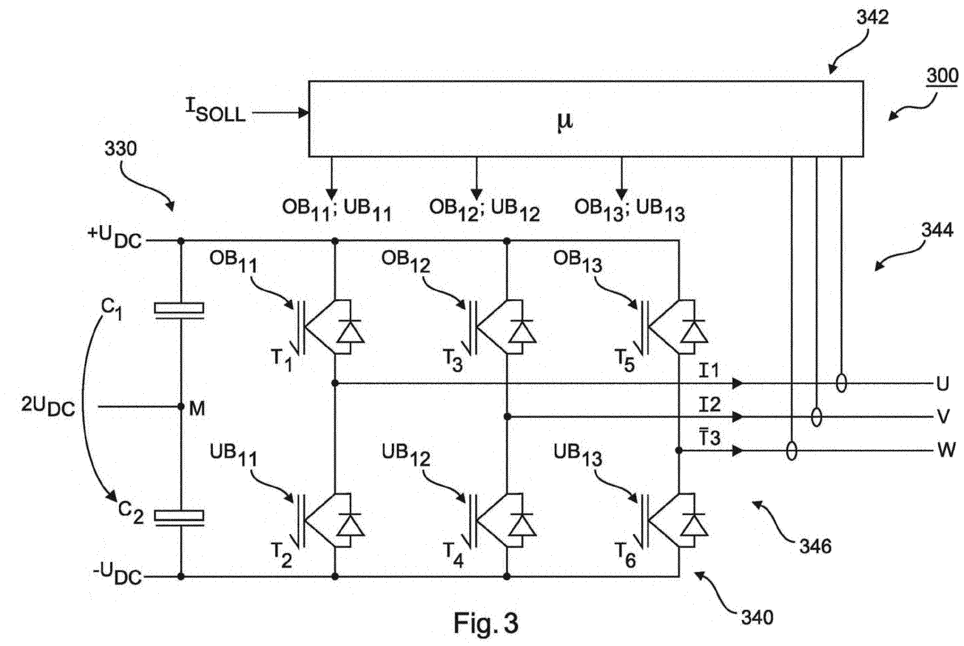

Fig. 3 zeigt schematisch den Aufbau 300 eines Wechselrichters zum Bereitstellen eines Wechselrichterstromes mittels eines Toleranzbandverfahrens. Insbesondere zeigt Fig. 3 dabei einen Teil, des in Fig. 2 gezeigten elektrischen Stranges.

Der Aufbau 300 weist einen Gleichspannungszwischenkreis 330 auf, der über einen Gleichrichter mit dem Generator einer Windenergieanlage verbunden ist. Der Gleichspannungszwischenkreis 330 weist ein erstes Potential U_{DC+} und ein zweites Potential Udc- mit einem Mittenabgriff M auf. Zudem ist zwischen dem Mittenabgriff M und den beiden Potentialen U_{DC+}, U_{DC} jeweils ein Kondensator mit der Kapazität C₁, C₂ angeordnet, um Energie im Gleichspannungszwischenkreis 330 zu speichern und die Gleichspannung 2U_{DC} entsprechend zu glätten.

Der Wechselrichter 340, der mit dem Gleichspannungszwischenkreis 330 verschaltet ist, erzeugt für jede der drei Phasen U, V, W jeweils einen separaten Strom I₁, I₂, I₃ am Ausgang 346 des Wechselrichters 340. Der Wechselrichter 340 weist hierfür für jede der drei Phasen U, V, W jeweils einen Oberschalter T₁, T₃, T₅ und einen Unterschalter T₂, T₄, T₆ auf, wobei die Ober- und Unterschalter T₁, T₂, T₃, T₄, T₅, T₆ insbesondere über den Kontroller 342 mittels eines Toleranzbandverfahrens angesteuert werden.

Der Kontroller 342 selbst arbeitet mit einem stromgeführten Toleranzbandverfahren. Hierfür erfasst der Kontroller 342 die vom Wechselrichter 340 erzeugten bzw. bereitgestellten Ströme I₁, I₂, I₃ am Ausgang 346 des Wechselrichters 340 mittels einer Stromerfassung 344. Die so erfassten Ströme I₁, I₂, I₃ werden mit einem Soll-Wert Isoll verglichen, um die Ansteuersignale OB₁₁, UB₁₁, OB₁₂, UB₁₂, OB₁₃, UB₁₃ für Ober- und Unterschalter T₁, T₂, T₃, T₄, T₅, T₆ zu bestimmen.

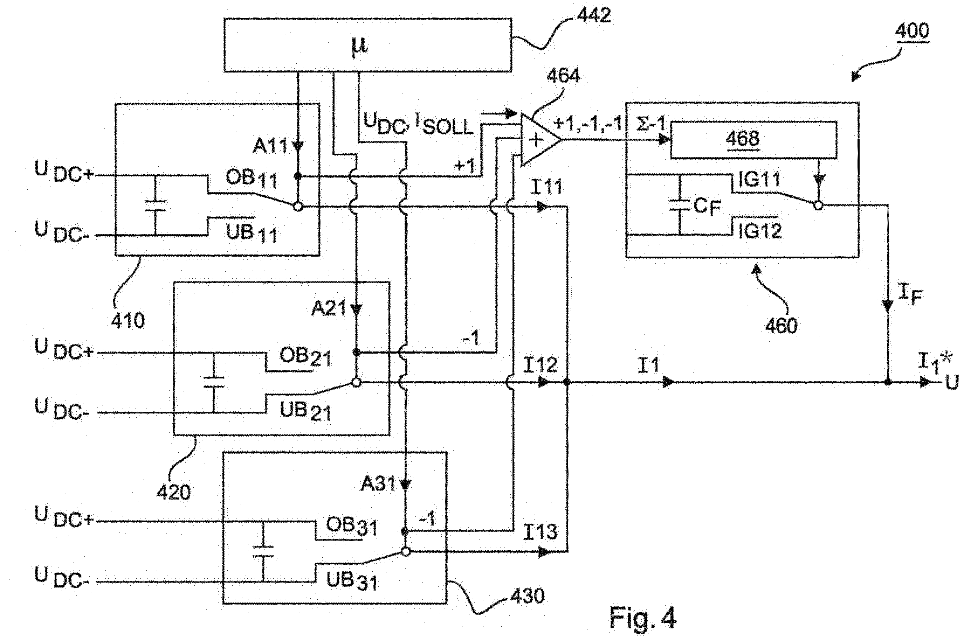

Fig. 4 zeigt schematisch die Kopplung 400 des aktiven Filters 460 mit den Schaltern OB₁₁, UB₁₁, OB₂₁, UB₂₁, OB₃₁, UB₃₁ mehrerer Wechselrichtermodule 410, 420, 430, dessen Wechselrichtermodulströme I₁₁, I₁₂, I₁₃ sich zu dem Wechselrichterstrom I₁ der Phase U überlagern. Fig. 4 zeigt also eine einphasige Ansicht der Phase U eines dreiphasigen Systems, umfassend die Phasen U, V und W.

Die Wechselrichtermodule 410, 420, 430 sind gleichstromseitig jeweils mit einem Gleichspannungszwischenkreis verbunden, was durch die Klemmspannung U_{DC+}, U_{DC-} angedeutet ist.

Zum Bereitstellen der Wechselrichtermodulströme I₁₁, I₁₂, I₁₃ werden die einzelnen Wechselrichtermodule 410, 420, 430 mittels der Ansteuersignale A₁₁, A₂₁, A₃₁ angesteuert. Die Ansteuersignale A₁₁, A₂₁, A₃₁ geben dabei den Oberschalter OB₁₁, OB₂₁, OB₃₁ und den Unterschaltern UB₁₁, UB₂₁, UB₃₁ einen entsprechenden Schaltzustand vor.

Das Wechselrichtermodul 410 weist dabei den Schaltzustand +1 auf, d.h. dass der Oberschalter OB₁₁ aktiv ist und der Unterschalter UB₁₁ inaktiv ist.

Das Wechselrichtermodul 420 weist dabei den Schaltzustand -1 auf, d.h. dass der Oberschalter OB₂₁ inaktiv ist und der Unterschalter UB₂₁ aktiv ist.

Das Wechselrichtermodul 430 weist dabei den Schaltzustand -1 auf, d.h. dass der Oberschalter OB₃₁ inaktiv ist und der Unterschalter UB₃₁ aktiv ist.

Die Ansteuersignale A₁₁, A₂₁, A₃₁ sowie die Zwischenkreisspannung U_{DC} und der Stromsollwert Iₛₒₗₗ für die Wechselrichtermodule 410, 420 430 werden der Sammelauswerteeinrichtung 464 zugeführt, die diese der Steuereinheit 468 des aktiven Filter 460 übergibt. Die Ansteuersignale A₁₁, A₂₁, A₃₁ werden der Sammelauswerteeinrichtung 464 dabei als Schaltzustände übergeben, nämlich in dem exemplarisch gezeigten momentanen Zustand als die drei Schaltzustände +1, -1 und -1.

Die Sammelauswertung 464 ist bevorzugt dazu eingerichtet, sowohl die einzelnen Schaltzustände der einzelnen Wechselrichtermodule 410, 420, 430 als auch einen Summenschaltzustand Σ aller Wechselrichter 410, 420, 430 widerzugeben.

Im vorliegenden Fall in dem exemplarisch gezeigten momentanen Zustand beträgt der Summenschaltzustand Σ -1. Anhand des Summenschaltzustandes Σ kann dann die Steuerung 468 des aktiven Filters den Anstieg der entsprechenden Flanken des Toleranzbandverfahrens der Wechselrichtermodule 410, 420, 430 ermitteln und entsprechend die Schalter des aktiven Filters mittels des Ansteuersignals S_{F} so ansteuern, dass der gefilterte Wechselstrom I_{C} weniger Oberschwingung aufweist, als der Wechselrichterstrom I₁.

Die Steuereinheit 468 steuert hierfür in Abhängigkeit der drei Schaltzustände +1, -1 und - 1 sowie der Zwischenkreisspannung U_{DC} und dem Stromsollwert Isoll die Schalter IG₁₁, IG₁₂ des aktiven Filters 460 durch das Ansteuersignal SF, welches ebenfalls einen Schaltzustand +1 für die Schalter IG₁₁, IG₁₂ des aktiven Filters 460 vorgibt. Der aktive Filter 460 erzeugt daraus mittels einer Gleichspannungsquelle C_{F} einen Filterstrom I_{F}, der mit Wechselrichterstrom I₁ zu einem gefilterten Wechselstrom I*₁ überlagert wird.

Die Steuerung der Schalter IG₁₁, IG₁₂ des aktiven Filters 460 kann beispielsweise mittels eines Look-Up-Tables erfolgen, in dem die Schaltzustände der Schalter IG₁₁, IG₁₂ des aktiven Filter 460 in Abhängigkeit der Schaltzustände der Ober- und Unterschalter OB₁₁, OB₂₁, OB₃₁, UB₁₁, UB₂₁, UB₃₁ der Wechselrichtermodule 410, 420, 430 hinterlegt sind.

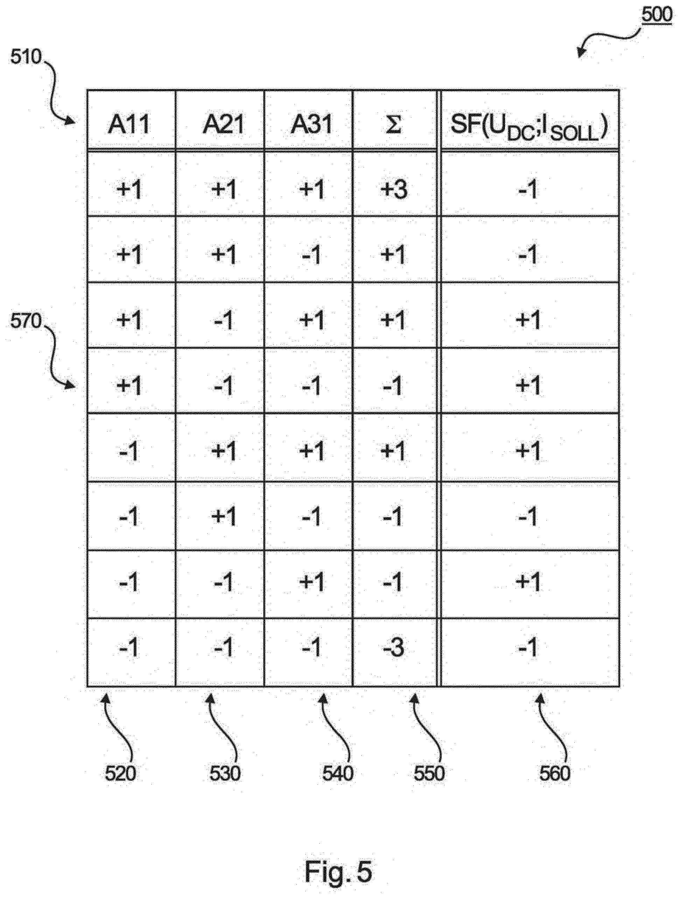

Der Look-Up-Table kann dabei entweder in der Sammelauswerteeinrichtung 464 oder in der Steuerung 468 des aktiven Filters 460 hinterlegt sein. Ein solcher Look-Up-Table, der auch als Steuertabelle bezeichnet wird, ist nachfolgend in der Figur 5 exemplarisch dargestellt.

Fig. 5 zeigt schematisch eine Steuertabelle 500 einer erfindungsgemäßen Sammelauswerteeinrichtung. Insbesondere zeigt Fig. 5 dabei eine Steuertabelle einer in Fig. 4 gezeigten Sammelauswerteeinrichtung.

In der Kopfzeile 510 sind die Ansteuersignale A₁₁, A₂₁, A₃₁ der Ober- und Unterschalter, der Summenschaltzustand Σ und das Ansteuersignal S_{F} des aktiven Filters abgetragen.

Die einzelnen Spalten 520, 530, 540, 560 weisen zudem die entsprechenden Schaltzustände der Ansteuersignale A₁₁, A₂₁, A₃₁, S_{F} auf. Die Spalte 550 gibt den entsprechend Summenschaltzustand Σ wieder.

Die Zeile 570 zeigt, der Figur 4 entsprechend, dass die Ansteuersignale A₁₁, A₂₁, A₃₁, die die Schaltzustände +1, -1 und -1 umfassen, dazu führen, dass an die Schalter des aktiven Filters der Schaltzustand +1 übermittelt wird.

Für eine vereinfachte Darstellung wurde hierbei angenommen, dass die Zwischenkreisspannung U_{DC} und der Stromsollwert Iₛₒₗₗ konstant sind und keinen Einfluss auf die Werte der Tabelle haben. In einer bevorzugten Ausführungsform werden diese aber berücksichtigt, was durch S_{F}(U_{DC}, Iₛₒₗₗ) angedeutet ist. Die Steuertabelle wäre dann entsprechend um die Spalten der Zwischenkreisspannung U_{DC} und dem Stromsollwert Iₛₒₗₗ zu ergänzen.

## Patentansprüche

1. Verfahren zum Einspeisen eines elektrischen Wechselstromes (I*₁, I*₂, I*₃) in ein elektrisches Versorgungsnetz mittels einer Windenergieanlage (100), und
- die Windenergieanlage (100) umfasst wenigstens einen Wechselrichter (340) mit einem Wechselrichterausgang zum Bereitstellen eines elektrischen Wechselrichterstromes (I₁, I₂, I₃) und
- der wenigstens eine Wechselrichter (340) ist an seinem Wechselrichterausgang mit einem aktiven Filter (460) gekoppelt, um den an dem Wechselrichterausgang bereitgestellten Wechselrichterstrom (I₁, I₂, I₃) zu filtern und dadurch einen gefilterten Wechselstrom (I*₁, I*₂, I*₃) zum Einspeisen in das elektrische Versorgungsnetz bereitzustellen,
umfassend die Schritte:
- Bereitstellen des elektrischen Wechselrichterstromes (I₁, I₂, I₃) am Wechselrichterausgang durch Schalthandlungen wenigstens eines Schalters des Wechselrichters (340),
**gekennzeichnet durch**
- Erfassen der Schalthandlungen des Wechselrichters (340), durch Erfassen von Ansteuersignalen,
- Steuern des aktiven Filters (460) in Abhängigkeit der erfassten Schalthandlungen, um den am Wechselrichterausgang bereitgestellten Wechselrichterstrom (I₁, I₂, I₃) zu filtern und dadurch den gefilterten Wechselstrom (I*₁, I*₂, I*₃) zu schaffen.

2. Verfahren zum Einspeisen eines elektrischen Wechselstromes (I*₁, I*₂, I*₃) nach Anspruch 1, **dadurch gekennzeichnet, dass**
- das Steuern des aktiven Filters (460) so erfolgt, dass der in das elektrische Versorgungsnetz eingespeiste elektrische Wechselstrom (I*₁, I*₂, I*₃) einen verringerten Oberschwingungsanteil gegenüber dem elektrischen Wechselrichterstrom (I₁, I₂, I₃) aufweist.

3. Verfahren zum Einspeisen eines elektrischen Wechselstromes (I*₁, I*₂, I*₃) nach Anspruch 1 oder 2,
**dadurch gekennzeichnet, dass**
- die Schalthandlungen des wenigstens einen Schalters eine Schaltfrequenz aufweisen und
- das Erfassen der Schalthandlungen mit einer Tastfrequenz erfolgt, wobei
- die Tastfrequenz wenigstens doppelt so groß, insbesondere wenigstens fünfmal so groß, bevorzugt wenigstens zehnmal so groß, ist, wie die Schaltfrequenz der zu erfassenden Schalthandlung des Schalters.

4. Verfahren zum Einspeisen eines elektrischen Wechselstromes (I*₁, I*₂, I*₃) nach einem der vorstehenden Ansprüche,
**dadurch gekennzeichnet, dass**
- das Steuern des aktiven Filters (460) abhängig eines die Schalthandlungen des wenigstens einen Schalters auslösenden Ansteuersignals erfolgt, und außerdem oder alternativ
- das Steuern des aktiven Filters (460) abhängig einer die Schalthandlungen des wenigstens einen Schalters auslösenden Steuerspannung erfolgt.

5. Verfahren zum Einspeisen eines elektrischen Wechselstromes (I*₁, I*₂, I*₃) nach einem der vorstehenden Ansprüche,
**dadurch gekennzeichnet, dass**
- der wenigstens eine Wechselrichter (340) mittels eines Toleranzbandverfahrens angesteuert wird, um den Wechselrichterstrom (I₁, I₂, I₃) am Wechselrichterausgang bereitzustellen und das aktive Filter den Wechselrichterstrom (I₁, I₂, I₃) abhängig der vom Toleranzbandverfahren erzeugten Schalthandlungen des wenigstens einen Schalters filtert.

6. Verfahren zum Einspeisen eines elektrischen Wechselstromes (I*₁, I*₂, I*₃) nach einem der vorstehenden Ansprüche,
**dadurch gekennzeichnet, dass**
- das Steuern des aktiven Filters (460) ohne Berücksichtigung des bereitgestellten Wechselrichterstromes (I₁, I₂, I₃) erfolgt.

7. Verfahren zum Einspeisen eines elektrischen Wechselstromes (I*₁, I*₂, I*₃) nach einem der vorstehenden Ansprüche,
**dadurch gekennzeichnet, dass**
- das Steuern des aktiven Filters (460) in Abhängigkeit der erfassten Schalthandlungen erfolgt, um wenigstens ein Oberschwingungsanteil des Wechselrichterstromes (I₁, I₂, I₃) zu reduzieren, insbesondere einen Stromoberschwingungsanteil des Wechselrichterstromes (I₁, I₂, I₃) zu minimieren, bevorzugt um einen Stromoberschwingungsanteil zu reduzieren, der ausgewählt ist aus der Liste umfassend:
- 1. Harmonische Stromoberschwingung bis
- 60. Harmonische Stromoberschwingung.

8. Verfahren zum Einspeisen eines elektrischen Wechselstromes (I*₁, I*₂, I*₃) nach einem der vorstehenden Ansprüche,
**dadurch gekennzeichnet, dass**
- der elektrische Wechselrichter (340) mehrere Wechselrichtermodule mit einem Wechselrichtermodulausgang zum Bereitstellen eines Wechselrichtermodulstromes umfasst und die Wechselrichtermodulausgänge so verschaltet sind, dass sich ihre Wechselrichtermodulströme zu dem Wechselrichterstrom überlagern, wobei
- eine Sammelauswerteeinrichtung vorgesehen ist, zum Erfassen und Auswerten von Ansteuersignalen der Wechselrichtermodule, und die Sammelauswerteeinrichtung das aktive Filter (460) zum Filtern des Wechselrichterstromes (I₁, I₂, I₃) ansteuert.

9. Verfahren zum Einspeisen eines elektrischen Wechselstromes (I*₁, I*₂, I*₃) nach einem der vorstehenden Ansprüche,
**dadurch gekennzeichnet, dass**
- das aktive Filter (460) zusätzlich in Abhängigkeit wenigstens einer Zwischenkreisspannung (U_{DC})des wenigstens einen Wechselrichters (340) und/oder eines Stromsollwertes für den wenigstens einen Wechselrichter (340) gesteuert wird.

10. Windenergieanlage (100) umfassend wenigstens einen Wechselrichter (340) mit einem Wechselrichterausgang zum Bereitstellen eines ersten Wechselstromes (I₁, I₂, I₃) und ein an den Wechselrichterausgang gekoppeltes aktives Filter (460) zum Filtern des Wechselrichterstromes (I₁, I₂, I₃), um einen gefilterten Wechselstrom (I*₁, I*₂, I*₃) zum Einspeisen in das elektrische Versorgungsnetz zu schaffen, **dadurch gekennzeichnet, dass**
- das aktive Filter (460) dazu eingerichtet, in Abhängigkeit einer, durch Erfassen von Ansteuersignalen ärfassten Schalthandlung wenigstens eines Schalters des Wechselrichters (340) gesteuert zu werden, um den Wechselrichterstrom (I₁, I₂, I₃) zu filtern und dadurch den gefilterten Wechselstrom (I*₁, I*₂, I*₃) zu schaffen.

11. Windenergieanlage (100) nach Anspruch 10,
**dadurch gekennzeichnet, dass**
die Windenergieanlage (100) einen Kontroller zum Ansteuern des Wechselrichters (340) aufweist, um ein Verfahren nach einem der Ansprüche 1 bis 9 durchzuführen.

12. Windenergieanlage (100) nach Anspruch10 oder 11,
**dadurch gekennzeichnet, dass**
- der wenigstens eine Wechselrichter (340) wenigstens sechs Schalter aufweist, wobei jeweils zwei Schalter, insbesondere ein Ober- und ein Unterschalter ausgebildet sind, einen Strom für jeweils eine Phase des Wechselrichterstromes bereitzustellen.

13. Windenergieanlage (100) nach einem der Ansprüche 10 bis 12,
**dadurch gekennzeichnet, dass**
- der wenigstens eine Schalter des Wechselrichters (340) bzw. die Schalter des Wechselrichters (340) als IGBTs oder MOSFETs ausgebildet sind.

14. Windenergieanlage (100) nach einem der Ansprüche 10 bis 13,
**dadurch gekennzeichnet, dass**
- der wenigstens eine Wechselrichter (340) ausgebildet ist, mittels eines Toleranzbandverfahrens angesteuert zu werden und das aktive Filter (460) ausgebildet ist, den Wechselrichterstrom (I₁, I₂, I₃) abhängig der vom Toleranzbandverfahren erzeugten Schalthandlungen des wenigstens einen Schalters zu filtern.

15. Windenergieanlage (100) nach einem der Ansprüche 10 bis 14,
**dadurch gekennzeichnet, dass**
- der Wechselrichter (340) ein Leistungswechselrichter ist, insbesondere ein Leistungswechselrichter, der dazu eingerichtet ist, in einem Vollumrichterkonzept einer Windenergieanlage (100) verwendet zu werden.

16. Windenergieanlage (100) nach einem der Ansprüche 10 bis 15,
**dadurch gekennzeichnet, dass**
- das aktive Filter (460) wenigstens ein aktives Bauteil aufweist, insbesondere wenigstens einen IGBT oder einen MOSFET, bevorzugt wenigstens einen Siliciumcarbid-IGBT oder einen Siliciumcarbid-MOSFET, das dazu eingerichtet ist, mit einer Taktfrequenz zu arbeiten, die bevorzugt größer ist als die Schaltfrequenz des wenigstens einen Schalters bzw. die größer ist als die Schaltfrequenz der Schalter multipliziert mit der Anzahl der Wechselrichtermodule des Wechselrichters.

17. Windenergieanlage (100) nach einem der Ansprüche 10 bis 16,
**dadurch gekennzeichnet, dass**
- der elektrische Wechselrichter (340) mehrere Wechselrichtermodule mit einem Wechselrichtermodulausgang zum Abgeben eines Wechselrichtermodulstromes umfasst und die Wechselrichtermodulausgänge so verschaltet sind, dass sich ihre Wechselrichtermodulströme zu dem Wechselrichterstrom überlagern, wobei
- eine Sammelauswerteeinrichtung vorgesehen ist, zum Erfassen und Auswerten von Ansteuersignalen der Wechselrichtermodule, und die Sammelauswerteeinrichtung (264) ausgebildet ist, das aktive Filter (460) zum Filtern des Wechselrichterstromes (I₁, I₂, I₃) anzusteuern.

18. Windenergieanlage (100) nach einem der Ansprüche 10 bis 17,
**dadurch gekennzeichnet, dass**
- das aktive Filter (460) so parallel zum Wechselrichterausgang verschaltet ist, dass das aktive Filter (460) dazu eingerichtet ist, wenigstens eine Stromoberschwingung des ersten Wechselstromes zu filtern, insbesondere zu reduzieren.

## Claims

1. A method for feeding an electrical alternating current (I*₁, I*₂, I*₃) into an electrical supply grid by means of a wind power installation (100), and
- the wind power installation (100) comprises at least one inverter (340) with an inverter output for providing an electrical inverter current (I₁, I₂, I₃) and
- the at least one inverter (340) is coupled at its inverter output to an active filter (460), in order to filter the inverter current (I₁, I₂, I₃) provided at the inverter output and thereby provide a filtered alternating current (I*₁, I*₂, I*₃) for feeding into the electrical supply grid,
comprising the steps of:
- providing the electrical inverter current (I₁, I₂, I₃) at the inverter output by switching actions of at least one switch of the inverter (340),
**characterized in that**
- sensing the switching actions of the inverter (340) by capturing of sensor signals,
- controlling the active filter (460) in dependence on the sensed switching actions, in order to filter the inverter current (I₁, I₂, I₃) provided at the inverter output and thereby create the filtered alternating current (I*₁, I*₂, I*₃).

2. The method for feeding in an electrical alternating current (I*₁, I*₂, I*₃) as claimed in claim 1, **characterized in that**
- the control of the active filter (460) takes place in such a way that the electrical alternating current (I*₁, I*₂, I*₃) fed into the electrical supply grid has a reduced harmonic component as compared with the electrical inverter current (I₁, I₂, I₃).

3. The method for feeding in an electrical alternating current (I*₁, I*₂, I*₃) as claimed in claim 1 or 2,
**characterized in that**
- the switching actions of the at least one switch have a switching frequency and
- the sensing of the switching actions takes place with a sampling frequency,
- the sampling frequency being at least twice, in particular at least five times, preferably at least ten times, the switching frequency of the switching action to be sensed of the switch.

4. The method for feeding in an electrical alternating current (I*₁, I*₂, I*₃) as claimed in one of the preceding claims,
**characterized in that**
- the controlling of the active filter (460) takes place depending on an activation signal initiating the switching actions of the at least one switch, and also or alternatively
- the controlling of the active filter (460) takes place depending on a control voltage initiating the switching actions of the at least one switch.

5. The method for feeding in an electrical alternating current (I*₁, I*₂, I*₃) as claimed in one of the preceding claims,
**characterized in that**
- the at least one inverter (340) is activated by means of a tolerance band method, in order to provide the inverter current (I₁, I₂, I₃) at the inverter output, and the active filter filters the inverter current (I₁, I₂, I₃) depending on the switching actions of the at least one switch generated by the tolerance band method.

6. The method for feeding in an electrical alternating current (I*₁, I*₂, I*₃) as claimed in one of the preceding claims,
**characterized in that**
- the controlling of the active filter (460) takes place without taking into account the inverter current (I₁, I₂, I₃) provided.

7. The method for feeding in an electrical alternating current (I*₁, I*₂, I*₃) as claimed in one of the preceding claims,
**characterized in that**
- the controlling of the active filter (460) takes place in dependence on the sensed switching actions, in order to reduce at least one harmonic component of the inverter current (I₁, I₂, I₃), in particular to minimize a current harmonic component of the inverter current (I₁, I₂, I₃), preferably to reduce a current harmonic component selected from the list comprising:
- 1st current harmonic to
- 60th current harmonic.

8. The method for feeding in an electrical alternating current (I*₁, I*₂, I*₃) as claimed in one of the preceding claims,
**characterized in that**
- the electrical inverter (340) comprises a number of inverter modules with an inverter module output for providing an inverter module current, and the inverter module outputs are interconnected in such a way that their inverter module currents are superposed to form the inverter current,
- a collective evaluation device being provided, for sensing and evaluating activation signals of the inverter modules, and the collective evaluation device activating the active filter (460) for filtering the inverter current (I₁, I₂, I₃).

9. The method for feeding in an electrical alternating current (I*₁, I*₂, I*₃) as claimed in one of the preceding claims,
**characterized in that**
- the active filter (460) is additionally controlled in dependence on at least one DC link voltage (U_{DC}) of the at least one inverter (340) and/or a current setpoint value for the at least one inverter (340).

10. A wind power installation (100) comprising at least one inverter (340) with an inverter output for providing a first alternating current (I₁, I₂, I₃) and an active filter (460) coupled to the inverter output for filtering the inverter current (I₁, I₂, I₃), in order to create a filtered alternating current (I*₁, I*₂, I*₃) for feeding into the electrical supply grid,
**characterized in that**
- the active filter (460) is designed to be controlled in dependence by capturing of sensors signals on a detected sensed switching action of at least one switch of the inverter (340), in order to filter the alternating current (I₁, I₂, I₃) and thereby create the filtered alternating current (I*₁, I*₂, I*₃).

11. The wind power installation (100) as claimed in claim 10,
**characterized in that**
the wind power installation (100) has a controller for activating the inverter (340), in order to carry out a method as claimed in one of claims 1 to 9.

12. The wind power installation (100) as claimed in claim 10 or 11,
**characterized in that**
- the at least one inverter (340) has at least six switches, two switches, in particular an upper switch and a lower switch are formed, respectively providing a current for in each case one phase of the inverter current.

13. The wind power installation (100) as claimed in one of claims 10 to 12,
**characterized in that**
- the at least one switch of the inverter (340) or the switches of the inverter (340) are formed as IGBTs or MOSFETs.

14. The wind power installation (100) as claimed in one of claims 10 to 13,
**characterized in that**
- the at least one inverter (340) is designed to be controlled by means of a tolerance band method and the active filter (460) are designed to filter the inverter current (I₁, I₂, I₃) depending on the switching actions of the at least one switch that are generated by the tolerance band method.

15. The wind power installation (100) as claimed in one of claims 10 to 14,
**characterized in that**
- the inverter (340) is a power inverter, in particular a power inverter that is designed to be used in a full converter concept of a wind power installation (100).

16. The wind power installation (100) as claimed in one of claims 10 to 15,
**characterized in that**
- the active filter (460) has at least one active component, in particular at least one IGBT or one MOSFET, preferably at least one silicon-carbide IGBT or one silicon-carbide MOSFET, which is designed to operate with a clocking frequency which is preferably greater than the switching frequency of the at least one switch or which is greater than the switching frequency of the switches multiplied by the number of inverter modules of the inverter.

17. The wind power installation (100) as claimed in one of claims 10 to 16,
**characterized in that**
- the electrical inverter (340) comprises a number of inverter modules with an inverter module output for delivering an inverter module current, and the inverter module outputs are interconnected in such a way that their inverter module currents are superposed to form the inverter current,
- a collective evaluation device being provided for sensing and evaluating activation signals of the inverter modules, and the collective evaluation device (264) is designed activating the active filter (460) for filtering the inverter current (I₁, I₂, I₃).

18. The wind power installation (100) as claimed in one of claims 10 to 17,
**characterized in that**
- the active filter (460) is interconnected with the inverter output in parallel in such a way that the active filter (460) is designed to filter, in particular to reduce, at least one current harmonic of the first alternating current.

## Revendications

1. Procédé d'injection d'un courant alternatif électrique (I*₁, I*₂, I*₃) dans un réseau d'alimentation électrique au moyen d'une éolienne (100), et
- l'éolienne (100) comporte au moins un onduleur (340) avec une sortie d'onduleur pour la fourniture d'un courant d'onduleur (I₁, I₂, I₃) électrique et
- l'au moins un onduleur (340) est couplé au niveau de sa sortie d'onduleur à un filtre actif (460) afin de filtrer le courant d'onduleur (I₁, I₂, I₃) fourni au niveau de la sortie d'onduleur et de fournir ainsi un courant alternatif (I*₁, I*₂, I*₃) filtré pour l'injection dans le réseau d'alimentation électrique,
comprenant les étapes :
- de fourniture du courant d'onduleur (I₁, I₂, I₃) électrique au niveau de la sortie d'onduleur par des opérations de commutation au moins d'un commutateur de l'onduleur (340),
**caractérisé par**
- la détection des opérations de commutation de l'onduleur (340) par détection de signaux de commande,
- la commande du filtre actif (460) en fonction des opérations de commutation détectées afin de filtrer le courant d'onduleur (I₁, I₂, I₃) fourni au niveau de la sortie d'onduleur et de créer ainsi le courant alternatif (I*₁, I*₂, I*₃) filtré.

2. Procédé d'injection d'un courant alternatif (I*₁, I*₂, I*₃) électrique selon la revendication 1, **caractérisé en ce que**
- la commande du filtre actif (460) est effectuée de sorte que le courant alternatif (I*₁, I*₂, I*₃) électrique injecté dans le réseau d'alimentation électrique présente une part d'oscillation supérieure réduite par rapport au courant d'onduleur (I₁, I₂, I₃) électrique.

3. Procédé d'injection d'un courant alternatif (I*₁, I*₂, I*₃) électrique selon la revendication 1 ou 2,
**caractérisé en ce que**
- les opérations de commutation de l'au moins un commutateur présentent une fréquence de commutation et
- la détection des opérations de commutation est effectuée avec une fréquence de balayage, dans lequel
- la fréquence de balayage est au moins deux fois plus grande, en particulier au moins cinq fois plus grande, de préférence au moins dix fois plus grande, que la fréquence de commutation de l'opération de commutation à détecter du commutateur.

4. Procédé d'injection d'un courant alternatif (I*₁, I*₂, I*₃) électrique selon l'une des revendications précédentes,
**caractérisé en ce que**
- la commande du filtre actif (460) est effectuée en fonction d'un signal de commande déclenchant les opérations de commutation de l'au moins un commutateur, et en outre ou en variante
- la commande du filtre actif (460) est effectuée en fonction d'une tension de commande déclenchant les opérations de commutation de l'au moins un commutateur.

5. Procédé d'injection d'un courant alternatif (I*₁, I*₂, I*₃) électrique selon l'une des revendications précédentes,
**caractérisé en ce que**
- l'au moins un onduleur (340) est commandé au moyen d'un procédé de bande de tolérance afin de fournir le courant d'onduleur (I₁, I₂, I₃) au niveau de la sortie d'onduleur et le filtre actif filtre le courant d'onduleur (I₁, I₂, I₃) en fonction des opérations de commutation générées par le procédé de bande de tolérance de l'au moins un commutateur.

6. Procédé d'injection d'un courant alternatif (I*₁, I*₂, I*₃) électrique selon l'une des revendications précédentes,
**caractérisé en ce que**
- la commande du filtre actif (460) est effectuée sans tenir compte du courant d'onduleur (I₁, I₂, I₃) fourni.

7. Procédé d'injection d'un courant alternatif (I*₁, I*₂, I*₃) électrique selon l'une des revendications précédentes,
**caractérisé en ce que**
- la commande du filtre actif (460) est effectuée en fonction des opérations de commutation détectées afin de réduire au moins une part d'oscillation supérieure du courant d'onduleur (I₁, I₂, I₃), en particulier de minimiser une part d'oscillation supérieure de courant du courant d'onduleur (I₁, I₂, I₃), de préférence de réduire une part d'oscillation supérieure de courant qui est sélectionnée à partir de la liste comprenant :
- une 1^{re} oscillation supérieure de courant harmonique à
- une 60^{e} oscillation supérieure de courant harmonique.

8. Procédé d'injection d'un courant alternatif (I*₁, I*₂, I*₃) électrique selon l'une des revendications précédentes,
**caractérisé en ce que**
- l'onduleur (340) électrique comporte plusieurs modules d'onduleur avec une sortie de module d'onduleur pour la fourniture d'un courant de module d'onduleur et les sorties de module d'onduleur sont connectées entre elles de sorte que leurs courants de module d'onduleur se superposent pour former un courant d'onduleur, dans lequel
- un dispositif d'évaluation de collecte est prévu pour la détection et l'évaluation de signaux de commande des modules d'onduleur, et le dispositif d'évaluation de collecte commande le filtre actif (460) pour la filtration du courant d'onduleur (I₁, I₂, I₃).

9. Procédé d'injection d'un courant alternatif (I*₁, I*₂, I*₃) électrique selon l'une des revendications précédentes,
**caractérisé en ce que**
- le filtre actif (460) est commandé en outre en fonction d'au moins une tension de circuit intermédiaire (D_{DC}) de l'au moins un onduleur (340) et/ou d'une valeur de consigne de courant pour l'au moins un onduleur (340).

10. Éolienne (100) comprenant au moins un onduleur (340) avec une sortie d'onduleur pour la fourniture d'un premier courant alternatif (I₁, I₂, I₃) et un filtre actif (460) couplé au niveau de la sortie d'onduleur pour la filtration du courant d'onduleur (I₁, I₂, I₃) afin de créer un courant alternatif (I*₁, I*₂, I*₃) filtré pour l'injection dans le réseau d'alimentation électrique,
**caractérisée en ce que**
- le filtre actif (460) est aménagé afin d'être commandé en fonction d'une opération de commutation détectée par détection de signaux de commande au moins d'un commutateur de l'onduleur (340) afin de filtrer le courant d'onduleur (I₁, I₂, I₃) et de créer ainsi le courant alternatif (I*₁, I*₂, I*₃) filtré.

11. Éolienne (100) selon la revendication 10,
**caractérisée en ce que**
l'éolienne (100) présente un dispositif de commande pour la commande de l'onduleur (340) afin de réaliser un procédé selon l'une des revendications 1 à 9.

12. Éolienne (100) selon la revendication 10 ou 11,
**caractérisée en ce que**
- l'au moins un onduleur (340) présente au moins six commutateurs, dans laquelle respectivement deux commutateurs, en particulier un commutateur supérieur et un commutateur inférieur, sont réalisés,
afin de fournir un courant pour respectivement une phase du courant d'onduleur.

13. Éolienne (100) selon l'une des revendications 10 à 12,
**caractérisée en ce que**
- l'au moins un commutateur de l'onduleur (340) ou les commutateurs de l'onduleur (340) sont réalisés en tant que IGBT ou MOSFET.

14. Éolienne (100) selon l'une des revendications 10 à 13,
**caractérisée en ce que**
- l'au moins un onduleur (340) est réalisé afin d'être commandé au moyen d'un procédé de bande de tolérance et le filtre actif (460) est réalisé afin de filtrer le courant d'onduleur (I₁, I₂, I₃) en fonction des opérations de commutation générées par le procédé de bande de tolérance de l'au moins un commutateur.

15. Éolienne (100) selon l'une des revendications 10 à 14,
**caractérisée en ce que**
- l'onduleur (340) est un onduleur de puissance, en particulier un onduleur de puissance qui est aménagé afin d'être utilisé dans un concept d'onduleur complet d'une éolienne (100).

16. Éolienne (100) selon l'une des revendications 10 à 15,
**caractérisée en ce que**
- le filtre actif (460) présente au moins un composant actif, en particulier au moins un IGBT ou un MOSFET, de préférence au moins un IGBT de carbure de silicium ou un MOSFET de carbure de silicium qui est conçu afin de travailler avec une fréquence de balayage qui est de préférence supérieure à la fréquence de commutation de l'au moins un commutateur ou qui est supérieure à la fréquence de commutation des commutateurs multipliée par le nombre des modules d'onduleur de l'onduleur.

17. Éolienne (100) selon l'une des revendications 10 à 16,
**caractérisée en ce que**
- l'onduleur (340) électrique comporte plusieurs modules d'onduleur avec une sortie de module d'onduleur pour la sortie d'un courant de module d'onduleur et les sorties de module d'onduleur sont connectées entre elles de sorte que leurs courants de module d'onduleur se superposent pour former un courant d'onduleur, dans laquelle
- un dispositif d'évaluation de collecte est prévu pour la détection et l'évaluation de signaux de commande des modules d'onduleur, et le dispositif d'évaluation de collecte (264) est réalisé afin de commander le filtre actif (460) pour la filtration du courant d'onduleur (I₁, I₂, I₃).

18. Éolienne (100) selon l'une des revendications 10 à 17,
**caractérisée en ce que**
- le filtre actif (460) est interconnecté parallèlement à la sortie d'onduleur de sorte que le filtre actif (460) soit conçu afin de filtrer, en particulier de réduire, au moins une oscillation supérieure de courant du premier courant alternatif.
